# EUROPEAN PATENT SPECIFICATION

(11) **EP 3 463 877 B1**
(45) Date of publication and mention of the grant of the patent: **10.03.2021**
(21) Application number: 17730940.8
(22) Date of filing: 30.05.2017
(51) Int. Cl.: B32B 37/00, B32B 27/28, B41J 2/22, B32B 38/00, B32B 37/24, B32B 37/26

(54) **METHOD OF MANUFACTURING A MULTI-LAYER ARTICLE**
VERFAHREN ZUR HERSTELLUNG EINES MEHRSCHICHTIGEN ARTIKELS
PROCÉDÉ DE FABRICATION D'UN ARTICLE MULTICOUCHE

(30) Priority: 30.05.2016 US 201662343108 P; 30.05.2016 GB 201609463
(43) Date of publication of application: 10.04.2019
(73) Proprietor: Landa Labs (2012) Ltd., 7612301 Rehovot (IL)
(72) Inventor: LANDA, Benzion, 7405135 Nes Ziona (IL); ABRAMOVICH, Sagi, 7339320 Ra'anana (IL); LEVANON, Moshe, 7608606 Rehovot (IL); CHECHIK, Helena, 7621312 Rehovot (IL)
(74) Representative: Harrison IP Limited
(86) International application number: PCT/IB2017/053181
(87) International publication number: WO 2017/208155

(56) References cited:
- WO-A2-2012/050929
- WO-A2-2013/132418
- US-A1- 2011 171 466

## Description

### FIELD

The present disclosure relates to a method of manufacturing a multi-layered article including a finished outer surface optionally having particular properties. The method is, for example, suitable for the preparation of a flexible intermediate transfer member (ITM) for use in an indirect printing system.

### BACKGROUND

Multi-layered articles are used in numerous applications. Typically, each layer predominantly contributes a particular function or characteristic to the multi-layered product. Such laminates can be either rigid *(e.g.,* decorative tiles) or flexible *(e.g.,* plastic laminates for packaging). Generally, manufacturing methods can attain better precision, when desired, for small articles *(e.g.,* a printed circuit) than for larger articles in which variations or sporadic defects are expected to affect the end product to a lesser extent.

In patent publication WO 2013/132418, Landa Corporation discloses an indirect inkjet printing system. In this system, droplets of an aqueous ink, comprising an aqueous carrier in which fine particles of pigment and resin are suspended or dissolved, are deposited onto the ink transfer surface of a release layer of an intermediate transfer member (ITM) at an image-forming station. The ITM, also called a blanket, can have, in this exemplary printing system, the form of a flexible endless belt, the ink transfer surface of which is preferably hydrophobic. The ITM transports the image made-up of the ink droplets from the image-forming station towards an impression station. During the transport, all or most of the ink carrier evaporates from the ink droplets to leave a tacky film of resin and pigment that constitutes the image. At the impression station, the tacky film is pressed onto and adheres to a printing substrate, separating cleanly from the ITM on account of the hydrophobic nature of the ink transfer surface, thereby forming a printed product.

As is described in WO 2013/132418, the ITM may be required to have several specific physical properties that may be achieved by having a complex multi-layer structure. Generally, the ITM includes a support layer, typically comprising a fabric, the support layer having a very limited elasticity to avoid deformation of an image during transport to an impression station. The ITM may additionally have a highly compliant thin layer immediately beneath the release layer to enable the tacky film to closely follow the surface contour of the substrate. The ITM may include other layers to achieve the various desired frictional, thermal, and electrical properties of the ITM.

Due to a well-defined structure and shape, toughness and deformation-resistance, the support layer is used as the starting point when making an ITM. Specifically, manufacture of an ITM is done by providing a support layer to which additional desired layers are added to construct the desired multi-layer structure. Typically, the different layers of the ITM are applied as a curable fluid.

The release layer that defines the ink transfer surface of the ITM is the last, uppermost layer that is formed. We have found that the topography, contour and even surface finish of the ink transfer surface may be determined to a large extent by the contour of the surface of the penultimate layer to which the incipient release layer is applied. For this reason, it has proven difficult to manufacture an ITM having a defect-free ink transfer surface with a desired surface finish. We have found that such defects may appreciably detract, in various ways, from release layer performance, a problem particularly aggravated when significant ITM lengths and widths are desired.

### SUMMARY

Thus, according to the invention, there is provided a method according to claim 1.

Desirable features of embodiments of the invention are set out in Claims 2 to 16 of the appended claims.

In some embodiments, the multi-layer article so prepared is a flexible multi-layer article. Though a finished object incorporating such a multi-layer article can have a variety of shapes, the article can typically be viewed as a sheet, even if in some embodiments it may be manufactured as a web. Any such article, whether flexible or not, can therefore be characterized by two predominant planar outer surfaces separated by the thickness of the article upon completion of its manufacture. As the first outer surface and the second outer surface need not be the same, in the present disclosure the term "first outer surface" refers to the side of the article prepared by curing of a desired composition while contacting a defined carrier surface.

The defined finish of the carrier contact surface, also simply referred to as the carrier contact surface finish or the carrier finish, can be any property such surfaces can assume, including, among others, surface roughness / smoothness, surface hydrophobicity / hydrophilicity, surface hygroscopicity / water saturation, surface energy, surface charge, surface polarity, and the like properties often relied upon to characterize surfaces of articles. It is believed that some such "finish properties" of the carrier can to some extent influence the corresponding finish property of the outer surface formed and at least partially cured thereon. It can be said that the finish of the outer surface, which can also be referred to as the article finish, is induced by the carrier contact surface, or otherwise at least partially mimics or reproduces the carrier contact surface finish, though such terms are not meant to say the respective finishes would be identical nor symmetrically opposite. To the extent such outer surfaces, once fully cured, are to interact with other materials (*e*.*g*., inks or treatment solutions when the outer surface is the release layer of an ITM), then the manufacturing method may additionally affect the interplay / interface between the manufactured article and the compositions or structures with which it is to be used.

Though in the following, a system in which an article prepared by the method herein disclosed is exemplified by an indirect printing system in which the multi-layered article manufactured according to the present teachings is an ITM upon which liquid inks can be deposited, this need not be construed as limiting. For instance, the ink need not necessarily be liquid *(e.g.,* it can also be a paste, a solid *etc.),* its coloring agents need not be exclusively pigments or dyes *(e.g.,* they can alternatively be inorganic materials such as metals, ceramics, micas and the like providing any desired effect) and such variations readily apparent to the skilled persons. Thus the term "ink-transfer surface of the ITM" and its variants, which relates to the outermost surface of the multi-layered article upon which a material can be deposited before being transferred to a second surface, is to be understood in its broadest applicable meaning.

As used herein, the term "base" refers to all the layers of the multi-layer article excluding the first outer layer, for instance, all the layers of an ITM excluding the release layer. The base, among other functions, supports the release layer of the ITM. In some embodiments, the base consists of a single layer, serving as a support layer, which can optionally serve additional functions, and may typically include, or consist of, a fabric.

In some embodiments, the base comprises at least two layers. As the article includes a release layer and a base, which in turn may consist of more than one layer, the article is said to be a "multi-layer" or "multi-layered" article.

Unless explicitly stated otherwise, any two steps set out herein may be carried out in any order that allows the teachings to be implemented.

In the description and claims of the present disclosure, each of the verbs "comprise", "include" and "have", and conjugates thereof, are used to indicate that the object or objects of the verb are not necessarily a complete listing of features, members, steps, components, elements or parts of the subject or subjects of the verb.

As used herein, the singular form "a", "an" and "the" include plural references and mean "at least one" or "one or more" unless the context clearly dictates otherwise.

As used herein, unless otherwise stated, adjectives such as "substantially" and "about" that modify a condition or relationship characteristic of a feature or features of an embodiment of the present technology, are to be understood to mean that the condition or characteristic is defined to within tolerances that are acceptable for operation of the embodiment for an application for which it is intended, or within variations expected from the measurement being performed and/or from the measuring instrument being used. When a numerical value is preceded by the term "about", the term "about" is intended to indicate +/-10%, +/-5%, or even only +/-1%, and in some instances the precise value.

### BRIEF DESCRIPTION OF THE DRAWINGS

Some embodiments of the invention are described herein with reference to the accompanying figures. The description, together with the figures, makes apparent to a person having ordinary skill in the art how some embodiments of the disclosure may be practiced. The figures are for the purpose of illustrative discussion and no attempt is made to show structural details of an embodiment in more detail than is necessary for a fundamental understanding of the disclosure. For the sake of clarity, some objects depicted in the figures are not to scale.

In the Figures:
Figures 1A and 1B schematically illustrate a cross section through a release layer prepared according to the prior art;
Figure 2 schematically illustrates a cross section through a release layer prepared according to the present method;
Figure 3A schematically shows a section through a carrier;
Figures 3B to 3F schematically exhibit different stages in the manufacture of an ITM, according to one aspect of the inventive method;
Figure 3G is a section through a finished ITM in its installed orientation in a printing system;
Figure 4 schematically displays an apparatus in which some embodiments of the present method can be implemented, and
Figure 5A to 5C schematically display different manufacturing stages using the apparatus of Figure 4.

### DETAILED DESCRIPTION

There is provided in accordance with an aspect of the present disclosure a method of manufacturing a multi-layered article having a finished outer surface, such an article, when flexible, being suitable as an intermediate transfer member (ITM) for use in an indirect printing system. In some embodiments, the finished outer surface provides some advantages relative to the art.

Though in the following, an ITM will be described in more detail, it is understood that the method herein disclosed is suitable for the preparation of a wide range of multi-layered articles, in particular, flexible multi-layered articles. The ITM is therefore to be construed as a non-limiting example.

In the art, a support layer of an ITM is used as a physically robust support structure onto which other ITM layers are added until the ITM is complete. A layer of fluid curable material, constituting an incipient release layer, is formed as the uppermost layer on top of previous layers, wherein the outer surface of the formed release layer comprises an ink transfer surface. As a result, the finish of the ink transfer surface is at least partially determined by the underlying layers, and is therefore susceptible to various faults.

Moreover, since the release layer is the uppermost layer, air bubbles may be disposed at or near the ink transfer surface, leading to surface defects. Vibrations occurring while the curable material is still fluid during the curing may cause ripples that eventually set, yielding an uneven ink-transfer surface. Dust and other debris may settle on and adhere to the incipient ink transfer surface, disadvantageously yielding uncontrolled, heterogeneous surface properties that differ from the intended or designed surface properties.

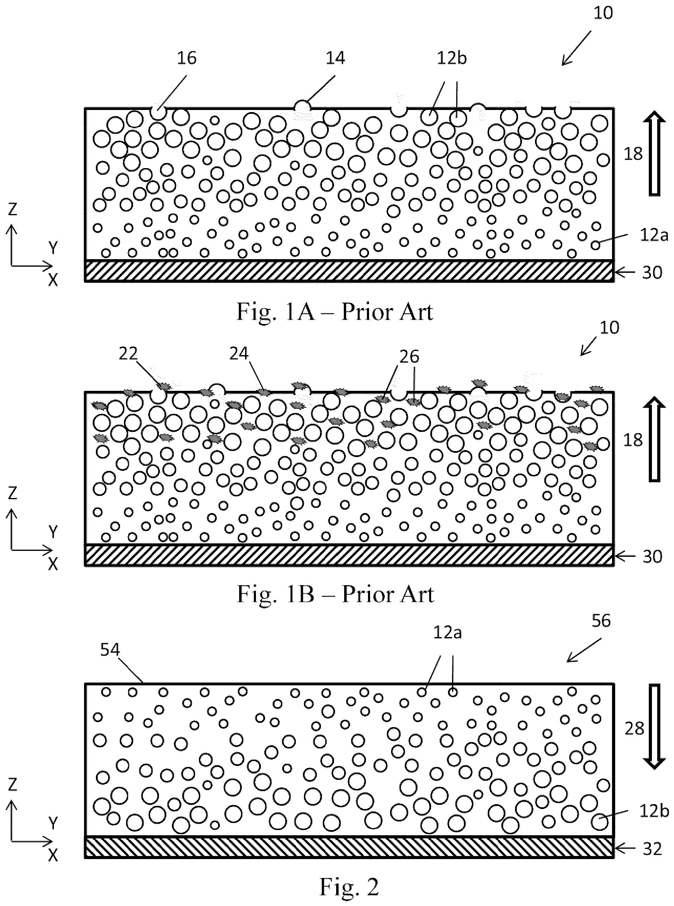

**Figures 1A and 1B** schematically illustrate how some such defects would appear in a section of an outer layer **10** *(e.g.,* a release layer) prepared according to an aforementioned method of the art. **Figure 1A** illustrates different phenomena relating to air bubbles that can be entrapped in any curable composition if the curing occurs before such bubbles can be eliminated (*e*.*g*., by degassing). During conventional manufacturing of layer **10** over a body **30,** the orientation of the structure is as shown by arrow **18,** the upper section of the drawing being at the air interface. As can be seen in the figure, as tiny bubbles **12a** migrate towards the air interface, they can merge into larger bubbles **12b.** The bubbles **12a** and **12b,** of various sizes, may either remain entrapped within the bulk of the layer or on its surface, the upper part of the trapped bubbles envelope forming protrusions **14.** When bubbles adjacent to the surface burst while the curing of the layer is advanced, craters or cavities **16** may remain, even if the segment of the envelope of the bubbles protruding from the surface has disappeared. These phenomena therefore typically provide a "gradient" of the distribution of air bubbles, the upper sections being generally either populated by larger bubbles than those of the lower sections and/or having a higher density of bubbles per cross section area or per volume, lower and higher being relative to the orientation of the layer during its manufacturing. The impact of bubbles-derived defects on the surface is self-evident, the heterogeneity of the surface typically negatively affecting any subsequent interactions, for instance with an ink image. With time, such an ITM being typically operated under tension and/or under pressure, craters may widen and merge to form more significant fissures. Thus, such phenomena may affect the structural integrity of the surface and any mechanical property such integrity would have conferred to the ITM.

**Figure 1B** schematically illustrates phenomena relating to solid contaminants, such as dust. Although the dust is represented as being in addition to air bubbles, this need not be the case, as each such surface or layer defect may be formed independently. As can be seen, solid contaminants **22** may remain upon the surface. If the settling of contaminants occurs after the outer layer **10** has been cured, then such contaminants **22** may be removed by suitable cleaning of the outer surface. Still, such a phenomenon is not desired, as it would require additional processing of such an ITM prior to use. Moreover, if such contaminations occur while the layer is still uncured, then the contaminants can be either entrapped on the surface of layer **10** (see for example contaminant particle **24,** which is seemingly floating), or can even be submerged within the release layer, (*e*.*g*., contaminant particle **26**). As can be readily understood, larger / heavier contaminants may sink more than smaller / lighter ones.

Moreover, it will be readily understood that while such a problem of surface defects might conceivably be circumvented if the final article can be cut from sporadic "defect-free" regions of a relevant multi-layered supply, such possible selection becomes less and less probable, as the size of the final article increases, whether in absolute terms, or with respect to the surface area of the source, or both. In some embodiments, the substantially defect-free final article, which may optionally be selected within regions of a self-supported multi-layer article according to the present teaching, has a surface area of at least 1 m², at least 2 m², at least 5 m², at least 10 m², at least 15 m², or at least 20 m². In some embodiments, the surface area of a self-supported multi-layer having a substantially defect-free surface coating is of at most 150 m², at most 125 m², at most 100 m², at most 75 m², or at most 50 m².

Unlike methods known in the art, the method disclosed herein comprises forming a layer of a fluid first curable material with one side of the layer contacting a carrier contact surface of a carrier, the layer constituting an incipient release layer. The carrier contact surface functions to protect the incipient release layer, giving this layer, which acts in operation of an ITM during printing as the ink transfer layer desired properties, while the carrier acts as a physically robust support structure onto which other layers are possibly added to form the ITM, until the ITM is complete. As a result, many potential sources of defects are avoided. Moreover, the finish of the ink transfer surface is determined primarily, if not exclusively, by the carrier contact surface.

**Figure 2** schematically illustrates a section through an outer layer **56** *(e.g.,* a release layer) prepared according to the inventive method. To facilitate comparison with previous drawings, the section is shown without a carrier and in the same orientation as Figures 1A and 1B, though the manufacturing is performed in inversed orientation as shown by arrow **28.** The base **32,** which shall be described in further detail hereinafter, is attached to the first outer layer **56** after layer **56** has been at least partially cured. Hence, base **32** is not equivalent to body **30,** which already serves as a support during the manufacturing process. For the sole sake of illustration, layer **56** is represented as including a considerable number of bubbles **12,** but this need not be the case. However, when present to any appreciable degree, such bubbles may display a distinct pattern with respect to those previously described. First, as the now uppermost surface **54** *(e.g.,* an ink transfer surface) of layer **56** was previously formed in contact with a carrier, no protrusions can be observed, the release layer being therefore devoid of phenomena such as surface protruding bubbles **14** (see Figure 1A). Likewise, the presence of such craters previously illustrated as craters or cavities **16** is very unlikely, as this would imply the use of an incompatible curable layer and carrier. As according to the present method, the curable material due to form the outer layer is to suitably wet the carrier, it is believed that substantially no air bubbles can be entrapped between the carrier and the incipient layer formed thereon. Thus, if at all present, bubbles would be disposed in the bulk of the layer. However, as the manufacturing is performed in inverted orientation as compared to conventional methods, the gradient of bubbles would, for the same reason, be inverted. Thus, from a statistical standpoint (and as depicted in Figure 2), smaller bubbles **12a** would be disposed closer to the outer surface **54** than larger bubbles **12b,** which would be disposed closer to the base **32.**

### Carrier contact surface finish

The inventors have discovered that since the surface finish of the ink-transfer surface helps define the extent of spreading and adhesion of the ink droplets applied at the image-forming station, it may be desirable for an ink-transfer surface to have a smooth and well-defined surface finish. Moreover, such a desired, smooth and well-defined surface finish can facilitate the mechanics of transfer of the tacky film to the substrate at the impression station. Because the first curable material forms a layer as a fluid and at least partially cures in contact with the carrier contact surface, the surface finish of the carrier contact surface may be tailored to effect, or contribute to, a desired or pre-determined surface finish of the ink-transfer surface. Accordingly, in some embodiments, the carrier contact surface has a defined surface finish, which helps provide a desired surface finish to the ink-transfer surface. For a typical ITM, an optical grade surface finish is generally desired, meaning an average roughness equal or smaller than about half wavelength of visible light. Thus, in some embodiments, the surface finish of the carrier contact surface is smooth, having an average roughness (Ra) of at most 250 nanometers (nm), at most 150 nm, at most 100 nm, or at most 75 nm. According to some embodiments, some polymer foils - e.g., laminated polyester films, such as polyethylene terephthalate (PET) foils, or polyimide films, such as Kapton® foils by E. I. du Pont de Nemours and Company - may be readily commercially available for use as a carrier, as is further detailed below. Such commercial foils have typical average roughness of at most 50 nm or at most 30 nm, or at most 25 nm and therefore carriers having a contact surface having such average roughness are also encompassed. According to some further embodiments, a carrier may be provided having a carrier contact surface having an average roughness of at most 20 nm, at most 15 nm, at most 12 nm, or at most 10 nm. Typically, Ra is at least 3 nm, at least 5 nm, or at least 7 nm. Alternatively and additionally, the carrier contact finish may include any desirable surface property, for instance any desired hydrophobicity/hydrophilicity of the carrier contact surface. A surface is said to be hydrophobic when the angle formed by the meniscus at the liquid/air/solid interface, also termed wetting angle or contact angle, exceeds 90°, the reference liquid being distilled water at room temperature (*circa* 23°C). Under such conditions, which are conventionally measured with a goniometer or a drop shape analyzer and can be assessed at any given temperature and pressure (*e*.*g*., at ambient conditions or under conditions of relevance to the manufacturing process or to the use of the manufactured article), the water droplet tends to bead and does not wet the surface. Conversely, a surface is deemed hydrophilic when the contact angle is less than 90°, the water droplet readily spreading and wetting the surface.

It is noted however that according to aspects of some embodiments, hydrophobicity (or hydrophilicity) of the carrier contact surface as determined by a drop of water as explained above, does not predict the wettability of the carrier contact surface by a fluid other than water, as such wettability is generally determined by the difference between the surface energies of the carrier and the fluid. When the surface energy of the fluid is comparable to that of the carrier, then high wetting may be obtained (moreover, if the surface energy of the fluid is lower than that of the carrier, then complete wetting is facilitated and/or obtained). If however the surface energy of the fluid is considerably larger than that of the carrier, then low wetting is obtained or wetting may be prevented. In conclusion, a fluid may wet a hydrophobic carrier (on which water might demonstrate beading), if the surface energy of the fluid is comparable or smaller than that of the carrier. For example, most (untreated) polymers considered for the present method have a surface energy considerably lower than the surface energy of water, namely lower than about 72mJ/m² (also equal to about 72mN/m) and hence are not tended to be wetted by water. Some such polymers may be strict hydrophobic. However, a drop of a fluid different from water may well wet such a polymer, if such other fluid has a surface energy lower than that of the polymer surface.

Moreover, in some embodiments, even the said difference in surface energies does not unambiguously predict the wettability of the carrier by a viscous fluid. In some such embodiments, a carrier contact surface having a relatively low surface energy may be wetted by a viscous fluid, having a considerably higher surface energy than that of the carrier contact surface. In such embodiments the viscosity depresses the beading of the fluid, and therefore facilitates the formation of a continuous, uninterrupted and unbroken contact between the fluid and the carrier contact surface. In other words, as a viscous fluid is applied to the low-surface energy surface, wetting of the surface is obtained in practice, displaying a non-equilibrium state of the fluid on the surface. Consequently, if the fluid is curable, and the fluid is cured before beading progresses to reach the steady state, then the continuous, uninterrupted and unbroken contact between the fluid and the surface may be stabilized. Thus, as used herein, the terms hydrophobicity and hydrophilicity are used to characterize a surface *(e.g.,* the carrier contact surface or a release surface of an ITM) in the presence of a drop of water. The term wettability and its derivatives are used in a broader sense to characterize a surface *(e.g.,* the carrier contact surface) in the presence of a fluid, not necessarily water.

The present inventors have surprisingly found that the release layer of an ITM manufactured according to the present teachings has a polarity that differs from that of a release layer prepared by methods of the art, where the outer surface faces air rather than a carrier contact surface. This unexpected phenomenon is exemplified below.

### Foil carrier

The carrier may be any suitable carrier. As discussed in greater detail below, in some preferred embodiments, the carrier is a flexible foil, *i.e.,* a thin flexible sheet. One advantage of a foil carrier, for some embodiments, is that foils having a suitable surface finish, for example, sufficient smoothness, are readily available. Likewise, such foils may have a variety of compositions, providing a wide range of hydrophobic/hydrophilic surface properties, or any such surface properties that may serve the intended use of the article. In some embodiments, the flexible foil has a thickness of at least 10 micrometers (µm), at least 50 µm, or at least 100 µm. In some embodiments, the flexible foil has a thickness of at most 4000 µm, or of up to 2000 µm. In some embodiments, during the forming of the incipient release layer of the fluid first curable material, the carrier is supported on a continuous flat support, for example, a table or the like. In a particular embodiment that will be detailed hereinafter, the carrier is in motion during the forming of the incipient release layer and/or during the attachment or formation of the base upon the at least partially cured release layer. In such a case, the carrier may additionally be required to have mechanical properties adapted to such motion.

The finished article comprises the carrier and, attached thereon, the self-supported strip, generally comprising the release layer and the base layer. The self-supported strip is peelable from the carrier, namely the carrier and the self-supported strip may be detached from one another by peeling, without damaging the structural integrity of the strip, and optionally preferably of the carrier. Such peeling exposes the release layer of the self-supported strip, rendering the strip ready for use. It is emphasized that such peeling may, according to some embodiments, be employed as close as possible prior to using the strip. In other words, following manufacturing as herein described, the carrier with the strip attached thereto may be stored, and then shipped to be used, whereas, during the periods of said storing and shipment, the release layer of the strip is protected by the carrier from physical damage and dirt. However, regardless of the time when such separation is conducted - whether immediately after the construction of the finished strip in the manufacturing site, or soon before use - the carrier is capable of withstanding such a peeling step, required for detaching the carrier from the self-supported strip. In other words, the carrier is configured to have a tear strength larger than the peeling strength required to perform such detachment.

The carrier and the carrier contact surface may be of any suitable material or combination of materials, as long as said materials are compatible with the manufacturing method. For instance, they need to withstand the operating conditions of the method, for example they need to be resistant at least to the curing factors *(e.g.,* to the temperature required for heat curing, or to the irradiation necessary for UV curing, *etc.),* the pressure, tension, or any other like parameter that can be applied during preparation of the multi-layer structure. More specifically, the carrier is capable of maintaining mechanical integrity during and following exposure to the curing process, *e*.*g*., curing temperatures, such being typically up to 200°C (or, in embodiments comprising UV curing - following exposure to UV radiation, *etc*). Mechanical integrity of the carrier is used herein interchangeably with "structural integrity" and includes, for example, dimensional stability, namely no shape distortions, stability of the finish characteristics of the carrier contact surface, explicitly including smoothness, lack of wrinkles, *etc.* Such mechanical integrity of the carrier is maintained at least until the self-supported strip and the carrier are detached from one another.

In this context and without wishing to be held to any one theory, it is currently believed that in some embodiments, there may be charged or polar interactions between the carrier contact surface and the formed layer of fluid first curable material at the interface that provide the ink-transfer surface with properties that may be advantageous for various applications, *e*.*g*., when the ITM is used for printing. Presumably, in such embodiments, while the first curable material is still fluid, polar groups thereof interact with groups in the carrier contact surface, leading to alignment of polar groups in the direction of a surface of the curable layer. Subsequently, curing is effected to an extent sufficient to maintain this alignment at least to an appreciable degree. In some embodiments, such alignment of polar groups of the first curable material leads to changes in surface chemistry and surface energy that may influence the interaction of the ink transfer surface with a chemical conditioning agent, the ink and/or with the tacky layer.

### Carrier contact surface of metal

In some embodiments, the carrier contact surface comprises a surface selected from the group consisting of a metal *(e.g.,* chromium, gold, nickel) surface and a metal oxide (*e.g*., aluminum oxide) surface. It is currently believed that in some such embodiments, polar groups of the fluid first curable material of the formed layer interact with metal (*e*.*g*., aluminum) atoms apparent on the carrier contact surface.

In some embodiments, the carrier includes, and in some embodiments consists of, a material selected from the group consisting of a metal foil, aluminum foil, a metallized polymer foil *(e.g.,* metallized PET) and an aluminized polymer *(e.g.,* aluminized PET) foil. In some embodiments, the polymer foil is coated with fumed aluminum metal.

### Carrier contact surface of polymer

In some embodiments, the carrier contact surface includes, and in some embodiments, consists of, a polymer surface.

In some embodiments, the carrier contact surface includes a polymeric surface which comprises polar groups such as Si-O-Si or C-O-C. While such groups clearly have a polar contribution, they would not be expected to chemically react with other species under typical process conditions. In some embodiments, the polar groups of the polymeric surface may include carbonyl groups (RCOR), carboxyl groups (-COOH, -COO⁻), amide groups (-CONH₂), and combinations thereof. It is currently believed that in some such embodiments, polar and/or functional groups of the formed release layer or outer layer may interact with polar and/or functional groups apparent on the carrier contact surface.

In some embodiments, the carrier contact surface includes polar and/or functional groups having at least one free electron pair. In some such embodiments, at least one such polar and/or functional group is selected from the group consisting of carboxyl groups, carbonyl groups, amide groups and combinations thereof. In some such embodiments, the carrier contact surface comprises functional groups having at least one free electron pair selected from the group consisting of carbonyl groups and amide groups. It is currently believed that in some such embodiments, functional groups of the fluid first curable material of the formed layer interact with free electron pairs of the functional groups apparent on the carrier contact surface.

In some embodiments, the carrier contact surface includes, mainly includes (at least 50% by weight), or consists essentially of, a polymer selected from the group consisting of polyesters, such as polyethylene terephthalate (PET), polyfluorocarbons, such as polytetrafluoroethylene (PTFE, as exemplified by Teflon®), and polyimide (such as poly (4,4'-oxydiphenylene-pyromellitimide, as in Kapton® films, for example). PET and Kapton® foils are particularly suited to be used as carriers. PET and Kapton® films are strong, have relatively high tear strength and tensile strength and very good dimensional stability at temperatures required for curing *(e.g.,* up to 200°C). Further, PET and Kapton® carriers are commercially available as large sheets of foil, *e.g.,* at lengths of tens of meters *(e.g.,* of 25 m or more, 50 m or more, 75 m or more, or 100 m or more) or even hundreds of meters *(e.g.,* of up to 500 m, up to 1000 m or up to 2000 m) and a width above 1 meter (m), and even above 2 m, rendering the foil suitable as a carrier for an ITM for a large-format (*e*.*g*., about 1.5 m) printing machine. The foils are typically smooth, with average roughness below 100 nm. Foils are available at a variety of thicknesses ranging from less than 1 millimeter (mm) down to less than 25 µm, and a film thickness may be selected so as to provide a required tear strength, *i.e.* withstand the tear force involved in detaching the cured fluid first curable layer - while peeling the self-supported strip - from the carrier (or *vice versa*). PET and Kapton® foils are also suitable as carriers for having medium surface energy (typically in the range of about 35-45mN/m when untreated), hence being hydrophobic, and substantially lacking functional groups on the surface (unless treated to that effect, in which case the surface energy can be in the range of about 60-70mN/m), thus inhibiting adhesion thereon. Such foils may consequently allow the easy separation (*i.e.* separation involving relatively low force) of the cured fluid first curable layer therefrom. According to some embodiments, PET is preferable to Kapton®, as a carrier, for being considerably cheaper.

### Inducing hydrophilicity to the cured material by the carrier

In some embodiments, carrier **50** may advantageously be configured or adapted to have a hydrophilic carrier contact surface, such hydrophilicity being employed to induce increased hydrophilicity on the surface coating in contact therewith, for instance on the release surface of the release layer. It is emphasized that "hydrophilicity" herein is used in the relative sense, meaning that a carrier contact surface having a relatively high surface energy E₂ may be employed to modify the surface energy of a release surface. More specifically, a curable material having a naturally-occurring surface energy E₀, where E₀ is smaller than E₂, may be used to form a release layer on the said carrier, so that the release surface of the release layer has a surface energy E₁ greater than E₀. In other words, the surface energy E₁ of the release layer may be altered, determined or tuned (relative to the naturally-occurring surface energy Eo) by forming the release layer on a carrier contact surface according to the teachings herein. According to some such embodiments, the carrier may be pre-treated or otherwise configured or adapted to have a specific surface energy (demonstrated by a specific hydrophilicity / hydrophobicity), so as to obtain a desired surface energy (and hence a desired hydrophilicity) of the release surface. It should further be noted that the "specific hydrophilicity / hydrophobicity" of a surface may be quantitatively assessed by contact angle measurements of a water drop on the surface, as is well known in the art and as utilized in the example provided herein below.

According to some embodiments, as illustrated by the detailed example hereinbelow, carrier **50** may be configured or adapted to have a hydrophilic carrier contact surface, thereby inducing a significant increase in the hydrophilicity of a release layer made form an initially hydrophobic curable material. According to some embodiments, a carrier film may be treated by the addition of antistatic agents, *e*.*g*., based on long-chain aliphatic amines (optionally ethoxylated) and amides, quaternary ammonium salts (*e*.*g*., behentrimonium chloride or cocamidopropyl betaine), esters of phosphoric acid, polyethylene glycol esters, or polyols, to name a few. It is believed that the molecules of such antistatic agents have both hydrophilic and hydrophobic areas. The hydrophobic side interacts with the surface of the carrier, and the hydrophilic side interacts with the air moisture and binds ambient water molecules, to render the film anti-static. This envisaged orientation of the anti-static molecules (or of any other molecules or parts thereof able to similarly align along an hydrophobic-hydrophilic axis or polar axis, whether in the carrier or in any other layer or material) can also be referred to as polarization. The ability of a material to polarize, as afore-described, may depend on the chemical structure of the material, the cross-linking density of the layer formed thereby, and the capacity of such molecules to align themselves within such a layer. Such alignment generally takes place during curing, the molecules having a higher mobility while the material is still fluid. However, it cannot be ruled out that such polarization may also occur in a cured layer.

In this example, a commercially available anti-static PET film is used as a carrier, the somewhat hydrophilic properties of the carrier contact surface are induced in the release layer surface (and more generally in any surface coating prepared by the present method).

In other words, carrier **50** may advantageously be formed of a commercially available anti-static polymeric film, for example, a polyester film such as PET.

The surprising advantages of such anti-static carriers will be illustrated in the following example wherein the polyester film was made of PET. A same first curable composition (curable release layer formulation No. 1, below detailed) was applied on three different carriers: a) an untreated polyester film (*i.e.* not anti-static), such as commercially available Skyroll SH 76 by SKC Inc.; b) an anti-static polyester film, such as commercially available Skyroll SH 92 by SKC Inc.; and c) an aluminized polyester film, available from Hanita Ltd.

An exemplary curable release layer formulation No.1 was prepared by thoroughly mixing the materials provided in Table 1 below.

**Table 1**

| **Ingredient** | **Supplier** | CAS **Number** | **Description** | | **Weight parts** |
|---|---|---|---|---|---|
| **DMS-V36** Resin | Gelest | 68083-19-2 | Vinyl terminated polydimethyl siloxane | | 70.0 |
| | | | Viscosity | 5,000 mPa.s | |
| | | | MW | ∼49,500 | |
| | | | Vinyl | ∼0.018-0.050 mmol/g | |
| **VQM-146** Resin | Gelest | 68584-83-8 | 20-25% Vinyl resin in DMS V46 | | 40.0 |
| | | | Viscosity | 50,000-60,000 mPa.s | |
| | | | Vinyl | ∼0.18-0.23 mmol/g | |
| **Polymer** | Evonik | | Vinyl functional polydimethyl siloxane | | 30.0 |
| **RV 5000** | | | Viscosity | 3,000 mPa.s | |
| **(XPRV 5000)** Resin | | | Vinyl | ∼0.4 mmol/g | |
| **Inhibitor 600** | Evonik | 204-070-5 Mix of divinylpolydimethylsiloxane and 2-methylbut-3 -yn-2-ol | | | 5.0 |
| Cure | | Viscosity | 900 mPa.s | | |
| Retardant | | Vinyl | 0.11 mmol/g | | |
| **SIP6831.2** Catalyst | Gelest | 68478-92-2 | Platinum divinyltetramethyldisiloxane | | 0.1 |
| | | | Platinum | 2.1-2.4% | |
| **HMS-301** Cross-Linker | Gelest | 68037-59-2 | Poly(dimethylsiloxane-co-methyl-hydrosiloxane), trimethylsilyl terminated | | 12.0 |
| | | | Hydride | 4.2 mmol/g | |
| **Silsurf A010-D-UP** Additive | Siltech | 134180-76-0 | Polyether siloxane copolymer | | 5.0 |

The curable fluid was applied on the three tested carriers as described in more detail for formulation No. 2 and cured in a similar manner. The carriers were peeled away, exposing the surface previously in contact therewith, such surfaces intended to serve as ink image receiving surface in a printing system. The advancing (ACA) and/or receding (RCA) contact angles of a 0.5-5 microliter (µl) droplet of distilled water were measured on the different carriers and on the ink receiving surface of the cured release layers casted thereon. For comparison, contact angle was also assessed on the surface of the release layer which faced air during casting and curing (*i.e*., the back side of the surface coating which can be further attached to a base).

A relatively low contact angle (pointing to a more hydrophilic surface) is deemed correlated with a higher proportion of molecules being oriented along the hydrophobic-hydrophilic direction within the underlying layer. In other words, a relatively lower contact angle on surface suggests a greater polarization of underlying molecules, or parts thereof, as compared to a surface having a relatively higher contact angle (pointing to a more hydrophobic surface.

All contact angle measurements were performed with a Contact Angle analyzer - Krüss™ "Easy Drop" FM40Mk2 and/or a Dataphysics OCA15 Pro (Particle and Surface Sciences Pty. Ltd., Gosford, NSW, Australia). The results are shown in Table 2.

**Table 2**

| | **Contact Angle of Carrier** | | **RCA of Cured Release Layer** |
|---|---|---|---|
| **Carrier** | **ACA** | **RCA** | |
| **Untreated PET** | 70° | 40° | 62° |
| **Anti-Static PET** | 40° | 20° | 45° |
| **Aluminized PET** | 80° | 40° | 62° |

Surprisingly, while the hydrophobicity of the back side of the surface coating (which served to approximate the hydrophobicity of a layer conventionally prepared with an air interface) was of about 90°, the ink transfer surfaces of the release layers prepared according to the present inventions herein tested displayed significantly lower values of at most about 60°. While the untreated and aluminized PET provided for a relatively similar and dramatic effect, the anti-static PET further lowered RCA value from about 60° for the former carriers to about 45°. Such results are surprising, as the release layers were expected (based on their chemical composition) to be hydrophobic. This was confirmed by the RCA displayed by the back side of the layer. The inventors have surprisingly found, however, that the release layer surfaces produced by the inventive method may actually be somewhat hydrophilic, and appreciably more hydrophilic than corresponding release layers, *i.e.,* release layers having the same composition, but manufactured using the conventional curing technique in which the release layer is exposed to air ("standard air curing"). Without wishing to be bound by theory, the inventors believe that during the intimate contact between the carrier contact surface and the incipient release layer surface, the somewhat hydrophilic properties of the carrier contact surface are induced in the release layer surface (and more generally in any surface coating prepared by the present method).

As can be seen from Table 2, the RCA of the surface formed while facing the carrier is about 20° greater than the RCA of the respective carrier and approximately 30° smaller than the RCA believed to represent the composition *per se.* While it cannot be ruled out that the "margins" surrounding the RCA of the surface coating as compared to its more hydrophilic carrier and its more hydrophobic composition may vary, without wishing to be bound by any particular theory, it seems that a surface coating prepared according to the present method has a contact surface whose hydrophilicity/hydrophobicity properties lie in between the properties of the same formulation, cured in air, and the carrier surface itself. Thus, the selection of a carrier having known hydrophobicity (or as illustrated in this example, hydrophilicity) may govern, at least to some extent, the hydrophobicity of the surface that is cast thereon. As the carriers as used herein can be further treated by physical or chemical treatment, in some such embodiments, the treatment can modify the hydrophobicity / hydrophilicity of the carrier, and in turn may affect the hydrophobicity / hydrophilicity of the surface coating, as assessed by way of example by the measurement of its RCA.

### Forming fluid first curable layer surface

As noted above, a layer of a fluid first curable material is formed with one side of the layer contacting the carrier contact surface, the layer constituting the incipient release layer of the ITM.

To ensure adequate contact between the carrier contact surface and the layer, as well as to ease processing, in some embodiments the carrier contact surface is wettable by the fluid first curable material. Having a wettable carrier contact surface advantageously improves the uniformity of the layer to be formed thereupon. Such increased wettability may also provide for or be associated with reduced surface defects, such as pin holes, "orange peel" and the like. Accordingly, in some embodiments, the surface energy of the carrier contact surface can be between 20 and 70 mJ/m², between 25 and 65 mJ/m², or between 30 and 60 mJ/m², such values being determined with distilled water at ambient temperature (*circa* 23°C).

To simplify the process of forming the layer of the fluid first curable material, in some embodiments the fluid first curable material is at a temperature of at least 10°C and not more than 50°C during the forming of the layer. In some embodiments, the temperature is at least 15°C. In some embodiments, the temperature is not more than 40°C and even not more than 35°C.

In some embodiments, the forming of the incipient release layer of the fluid first curable material comprises depositing the layer of the fluid first curable material onto the carrier contact surface, thereby forming the incipient release layer. In some embodiments, depositing the layer of the fluid first curable material onto the carrier contact surface comprises pouring the fluid first curable material onto the carrier contact surface.

The layer is of any suitable thickness. In some embodiments, the thickness of the incipient release layer is such that when substantially fully cured, the resulting release layer is not less than 2 micrometers and not more than 200 µm thick. By "substantially fully cured" is meant a stage of curing is reached or passed where the layer does not undergo any further substantial change in dimensions.

In some embodiments, it is desirable that the release layer of the ITM be of a relatively uniform thickness to provide superior printing results. Accordingly, in some embodiments, the variance of thickness of the layer of applied fluid first curable material is such that when substantially fully cured, the variance of thickness of the resulting release layer is within 5 micrometers, or within 2 micrometers, or within 1 µm, or within 0.5 µm, or within 0.2 µm of a predetermined thickness. In some embodiments, the variance of thickness of the layer of the applied fluid first curable material is such that when substantially fully cured, the variance of thickness of the resulting release layer is within 20% of a predetermined thickness, or within 15%, or within 10%, or within 5%. In some embodiments, during the forming of the layer of the fluid first curable material, the thickness of the formed layer of the fluid first curable material is mechanically adjusted while the first curable material is still fluid, for example, with the help of a knife, bar or roller. The skilled person knows how to select such a leveling means according to the desired thickness of the layer and/or the necessary accuracy.

### Curing

The fluid first curable material is cured in any suitable way, including fast curing and slow curing methods. The curing method selected may depend on the specific formulation of first curable material used.

In some embodiments, the method further comprises applying heat to the layer of the fluid first curable material, thereby increasing the rate of curing thereof.

In some embodiments, the method further comprises irradiating the layer of the fluid first curable material, thereby increasing a rate of curing thereof. Irradiation is with any suitable radiation, for example, UV light and electron beam.

### Fluid first curable material

As explained above, a suitable fluid first curable material is preferably configured for molding at about room temperature, *i.e.* is fluid between about 10°C and 50°C and in some embodiments between about 15°C and up to about 40°C or even up to about 35°C. Further, when used with a selected carrier, a suitable fluid first curable material preferably wets the carrier contact surface so as to obtain a continuous, uninterrupted and unbroken contact between the carrier contact surface and the release surface of the incipient release layer. Such a continuous, uninterrupted and unbroken contact may readily assist in generating a release surface which is substantially defect-free, or - alternatively or additionally - having a smoothness not less than the smoothness of the carrier contact surface.

Silicones, such as siloxane, and polyurethane are two examples of thermoplastic materials that are fluid at about room temperature and are heat-curable at temperatures suitable for the method described herein. Cured siloxane and polyurethane are further relatively resilient to working conditions - particularly temperature, pressure and exposure to chemicals - that are characteristic to those of an ITM in a printing machine. In "resilient" it is meant that an ITM having such a release layer could function well under a suitable work load in terms of intensity and time without damaging the release layer.

Various (cured) silicone elastomers (such as siloxanes) or polyurethanes are available at a wide range of hardness, including low hardness lower than about 40 Shore A, or 30 Shore A, or even as low as 20 Shore A, or medium hardness, *e*.*g*., between about 40 and 60 Shore A, or even at a high hardness, *e*.*g*., between about 60 and 90 Shore A, thus rendering such silicones / siloxanes or polyurethanes particularly suitable as a release layer in an ITM.

When employed onto some types of polymer carriers, such as polyester PET or polyimide Kapton® films, for forming a layer thereon, silicone elastomers, such as siloxanes, and polyurethanes typically wet the carrier contact surface (in the steady state), for having surface energy in the range of 20-35 mN/m, namely comparable or lower than that of the said carriers. According to some embodiments such wetting, which is generally desired in the scope of the method described herein, may be enhanced using known surface treatments applied to the carrier contact surface, such as activation by plasma, or UV radiation, or by corona treatment, or by chemical treatment (*e*.*g*., by application of treating fluids, including for instance surfactants). However, such surface treatment that can increase the carrier contact surface energy, may also enhance adhesion of the cured (or partially cured) surface coating or release layer to the carrier to an extent that may, for instance, hamper subsequent peeling.

It is noted that adhesion of the release layer to the carrier contact surface subsequent to curing may preferably be within a desired range. If adhesion is insufficient (namely too low), the release layer (due to serve during printing as ink-transfer surface) may separate from the carrier contact surface during curing, leading to deformation of the ink-transfer surface, or at some other undesirable time. If adhesion is too strong, during separation of the ITM from the carrier contact surface, the carrier contact surface may tear, so as to leave a residue on the ink-transfer surface, or conversely part of the release layer may be ripped so as leave a residue on the peeled carrier, or the ink-transfer surface may be otherwise damaged.

Thus, according to some embodiments, an uncured thermoplastic material such as a silicone elastomer, including or consisting of, by way of non-limiting example, siloxane, and polyurethane may preferably be employed onto a polymer carrier such as made of PET or Kapton®, without a prior surface treatment of the carrier. In such embodiments, the inert nature of both the carrier and the thermoplastic material - namely the lack of strong chemical reactions on the interfacing surfaces thereof - prevent strong adhesion, the residual adhesion that maintain the cured or partially cured layer attached to the carrier, resulting from the preliminary wetting of the carrier by the uncured material.

According to some embodiments, a fluid first curable material (such as the curable materials discussed above, *e*.*g*., siloxane) may be applied to a carrier having a low surface energy, lower for example than 25mN/m or even lower than about 20mN/m (*e*.*g*., Teflon® carrier contact surface). In such cases, if the liquid has a higher surface energy than the carrier contact surface, wetting may still be achieved because viscosity of the fluid first curable material is high enough to quench beading of the fluid, which is expected in the steady state. In other words, by employing a viscous fluid first curable material onto a low-surface energy carrier contact surface, beading of the fluid may be depressed, and consequently a continuous, uninterrupted and unbroken contact may be achieved between the fluid first curable material and the carrier. Then, curing or at least partial curing may preferably be employed within a short enough time after the application or deployment of the fluid first curable material onto the carrier, so as to cure the release layer before significant beading occurs. Additionally, due to the low surface energy of the carrier contact surface, adhesion of the cured release layer to the carrier contact surface subsequent to curing may be constricted to a desired range, facilitating later detachment of the release layer from the carrier by peeling.

Some siloxanes may be employed to form a layer on metalized surfaces as described above. For example, addition-curable siloxanes do not typically adhere to metalized surfaces *(e.g.,* an aluminum surface) and therefor may be employed for forming a release layer peelable from the carrier as described herein on an aluminum surface such as an aluminum plate, or aluminum foil, or aluminized film. In contrast, condensation-curable siloxanes might typically adhere to an oxidized layer naturally formed on metalized surfaces such as aluminum surface, and hence might be less suitable in such cases. It is noted however that in some commercially available aluminized polymer foils, the aluminum surface is further coated *(e.g.,* by nitrocellulose) thus rendering the aluminized foil suitable as a carrier also for condensation-curable siloxanes.

A first curable material may be selected that, when cured, has properties suitable for use as an ink transfer surface of an ITM. Such properties include chemical compatibility with ink formulations, the property to retain an ink droplet applied to the ink transfer surface at the image-forming station, and the property to release the tacky film to a substrate, typically in its entirety, without tearing or deformation thereof.

In some technologies, indirect printing can be done on an ITM previously conditioned to facilitate such ink attachment and release, in which case the outer surface of the ITM needs to be alternatively compatible with the conditioning treatment. In the event of a chemical treatment, the above principles can apply to the conditioning formulation in a manner substantially similar to those previously described for an ink formulation. Though in the present disclosure, for the sake of simplicity, the interaction being considered is between an ink-transfer surface and an ink formulation, such terminology should not be construed as limiting.

In some embodiments, the fluid first curable material comprises a silicone polymer, for example, a polydimethylsiloxane.

In some embodiments, the fluid first curable material comprises a vinyl-terminated silicone polymer, for example, a vinyl-terminated polydimethylsiloxane.

In some embodiments, the fluid first curable material comprises a vinyl-functional silicone polymer, *e.g.,* a vinyl-silicone polymer including at least one lateral vinyl group in addition to the terminal vinyl groups, for example, a vinyl-functional polydimethylsiloxane.

In some embodiments, the fluid first curable material comprises a heat-curable addition cure silicone polymer. Heat-curable materials have an advantage of including materials that are suitable for use as a release layer.

In some embodiments, the fluid first curable material comprises a condensation cure silicone polymer.

### Forming the base of the ITM

As discussed above, an ITM includes at least two, and typically more than two, layers, *e.g.,* the ink transfer layer and a base of the ITM that includes a support layer. A feature of some embodiments of the disclosure herein is that an ITM is made from the outside-in, first preparing an incipient release layer as discussed hereinabove, and then forming succeeding layers serially, one after the other, on the exposed side of a previously-made layer.

### Forming the base of the ITM with a fluid curable material

In some embodiments, the portion of the base that is proximate to the release layer is made by forming a layer of a fluid second curable material on the other side of the first curable material. Accordingly, in some embodiments the method further comprises forming a layer of a fluid second curable material on the other side of the layer of the first curable material, the layer of the fluid second curable material constituting an incipient layer of the base of the ITM. By "other side of the layer of the first curable material" is meant the side that is not in contact with the carrier contact surface.

In some embodiments, the method further comprises at least partially curing the layer of the second curable material, thereby forming at least part of the base of the ITM.

The thickness of the layer of the fluid second curable material is typically determined by the required thickness of the layer of the base that the layer of the fluid second curable material, when cured, constitutes. In some embodiments, the thickness of the layer of the fluid second curable material is such that when substantially fully cured, the resulting support layer is not less than 100 micrometers and not more than 500 micrometers thick.

In some embodiments, the layer of the fluid second curable material is formed while the layer of the first curable material is not fully cross-linked. The incipient layer of the first material is sufficiently cross-linked so as to provide backing / support to the new layer of the second material (*e*.*g*., having sufficient mechanical integrity to withstand, for instance, doctor blade application), such cross-linking being sufficiently partial so as to retain functional groups on the polymer backbone able to cross-link with the functional groups of the polymer of the second curable material. Such possible cross-linking between curable materials of different layers is expected to improve their mutual adhesion.

In some alternative embodiments, the forming the layer of the fluid second curable material comprises:
after the layer of the first curable material cures to an extent so as to be no longer fluid, applying a primer layer to the layer of the first curable material; and
depositing the fluid second curable material on the primer layer, thereby forming the layer of the fluid second curable material.

The primer is a material as known in the art that adequately bonds to both the first curable material and the second curable material, such attachment being retained while the respective layers are cured. Typically, a primer comprises at least some functional groups that bond to the first curable material and other different functional groups that bond to the second curable material. The thickness of the primer layer is any suitable thickness, in some embodiments, between 0.1 and 50 micrometers, or between 100 nanometers and 5 micrometers.

The layer of fluid second curable material is deposited on the primer layer in any suitable manner. In some embodiments, the depositing of the fluid second curable material is by pouring the fluid second curable material onto the primer layer. In some embodiments, the second curable material is levelled onto the primer layer using a wire rod or any appropriate levelling device or like applicator.

It is well known in the art that the addition of a solid reinforcement material to a fluid curable material leads to the formation of composite materials (*e*.*g*., fiber-reinforced plastic) having advantageous properties, typically including increased tenaciousness and/or tensile strength and/or reduced deformability.

In some embodiments, especially in embodiments where the fluid second curable material constitutes an incipient support layer of the base, while not being essential, the fluid second curable material may comprise a solid reinforcement material. In some such embodiments, the fluid second curable material comprises the solid reinforcement material prior to the forming of the layer of the fluid second curable material. For example, in some such embodiments, the fluid second curable material comprises reinforcement material suspended therein. For example, in some such embodiments, the fluid second curable material impregnates a solid reinforcement material, *e.g.,* a fabric.

In some embodiments, the method comprises, subsequently to the forming of the layer of the fluid second curable material and while the second curable material is still fluid, embedding a solid reinforcement material in the layer of the fluid second curable material. For example, in some such embodiments, a solid reinforcement material, *e.g.,* a fabric, is pressed into (and thereby embedded in) a layer of still-fluid second curable material.

In some embodiments, the method comprises, subsequently to the forming of the layer of the fluid second curable material, and while the second curable material is still fluid, placing a solid reinforcement material on an exposed surface of the layer of the fluid second curable material. For example, in some such embodiments, a solid reinforcement material, *e.g.,* a fabric, is laid on a layer of still-fluid second curable material.

### Forming the base of the ITM with a pre-formed sheet

In some embodiments, the portion of the base that is proximate to the release layer is made by securing a pre-formed solid layer or solid sheet to the other side of the first curable material.

Accordingly, in some embodiments, the method further comprises:
providing a sheet constituting an incipient layer forming at least part of the base of the ITM;
contacting the sheet to the other side of the layer of the first curable material; and
securing the sheet to the other side of the layer of the first curable material.

In some embodiments, the sheet is a polymer sheet. In some embodiments, the sheet is solely made of a single layer of material. In some embodiments, the sheet is a multi-layer sheet, having at least two different layers.

In some embodiments, the contacting of the sheet is carried out while the layer of the first curable material is still fluid. During the curing of the first curable material, bonds are formed between the curing first curable material and the sheet, thereby securing the sheet to the first curable material.

Alternatively, in some embodiments, the method further comprises:
after the layer of the first curable material cures to an extent so as to be no longer fluid, applying an adhesive layer to the layer of the first curable material; and
contacting the sheet with the adhesive layer, thereby securing the sheet to the other side of the layer of the first curable material.

As known in the art, an adhesive is a material that adequately bonds to both the first curable material and the sheet. Typically, an adhesive comprises at least some functional groups that bond to the first curable material and other different functional groups that bond to the sheet. The thickness of the adhesive layer is any suitable thickness, in some embodiments between 0.1 and 50 micrometers or between 100 nanometers and 5 µm.

In some embodiments, the sheet comprises embedded solid reinforcement material.

### Solid reinforcement material

Any solid reinforcement material may be found in the layer of the base that is proximate to the release layer.

Any suitable amount of solid reinforcement material may be found in the layer of the base that is proximate to the release layer. In some embodiments, the amount is not more than 10% by weight.

In some embodiments, the solid reinforcement material comprises, and in some embodiments, consists or consists essentially of, particles.

In some embodiments, the solid reinforcement material comprises, and in some embodiments, consists or consists essentially of, fibers.

In some embodiments, the fibers have a thickness of not less than 50 micrometers and not more than 200 micrometers.

In some embodiments, the fibers comprise a material selected from the group consisting of organic fibers, meta-aramid, para-aramid, polyamide, nylon fibers, polyester fibers, high density polyethylene fibers, natural fibers, cotton fibers, inorganic fibers, glass fibers, carbon-fiber fibers, ceramic fibers, metal fibers and combinations thereof.

In some embodiments, the fibers are surface-treated fibers, which surface treatment increases adhesion of the fibers, in some embodiments, to vinyl silanes.

In some embodiments, the fibers constitute a fabric. In some embodiments, the fabric has a thickness of not less than 50 micrometers and not more than 200 micrometers. In some embodiments, the fabric is 1-ply, in some at least 2-ply, in some at least 3-ply, and in some embodiments at least 4-ply.

In some embodiments, fabrics made of thin fibers *(e.g.,* of up to 1 mm thickness, or of up to 0.8 mm thickness, or of up to 0.6 mm thickness, or of up to 0.4 mm thickness, or even of up to 0.2 mm thickness) and having a relative high yarn density are desirable for particularly smooth finished surface. The yarn density can be expressed by the number of threads in the warp and weft direction of the fabric per unit of length. The number of threads in any given direction can be as low as about 10 per cm and as high as about 20 or even 30 per cm. The number of threads in each directions may be equal (*e*.*g*., 10*10) or may not be equal (*e*.*g*., 9*8, 12*10, 16*15, 17*12, 19*13, 19*12, or 19*10).

In some embodiments, the fabric is a non-woven fabric. In some embodiments, the fabric is a woven fabric.

In some embodiments, the fibers are oriented fibers. In some embodiments, the fibers are uni-directionally oriented, typically in parallel to the ITM longitudinal axis to reduce stretching. In some embodiments, the fibers are bi-directionally oriented, typically some oriented in parallel (0°) and some perpendicularly (90°) to the ITM longitudinal axis. In some embodiments, the fibers are three-directionally oriented, typically some oriented in parallel (0°), some perpendicularly (90°) and some either at 45° or -45° to the ITM longitudinal axis. In some embodiments, the fibers are four-directionally oriented, typically some oriented in parallel (0°), some perpendicularly (90°), some at 45° and some at -45° to the ITM longitudinal axis.

In some embodiments, the fibers may be attached one to another to form an unwoven or woven fabric ply. Fibers may be woven by any suitable weaving method of interlacing warp (0°) and weft (90°) fibers. Standard patterns include plain weave (wherein each warp fiber passes alternately under and over each weft fiber); basket weave (wherein two or more warp fibers alternately interlace with two or more weft fibers); and twill weave (wherein one or more warp fibers alternately weave over and under two or more weft fibers in a regular repeated manner), including satin weave, for which the number of fibers crossed and passed under is typically above four. Plain weave advantageously permits high yarn density and smooth finished surfaces.

Depending on any of the above-mentioned parameters, a fabric may be further characterized by its weight per surface, typically expressed in gram per square meter. Fabrics having a weight per unit area between about 180 g/m² and about 1000 g/m² can be suitable.

### Finishing the ITM

Finishing the ITM relates to the steps, in addition to those recited above, that are required to complete the manufacture of the ITM so that the ITM is ready for use.

In some embodiments, throughout the manufacturing process, the release layer is not separated from the carrier, so that the carrier serves as a protective layer for the ink-transfer surface. Accordingly, in some embodiments, the method further comprises, subsequently to '3', finishing manufacture of the ITM without separating the release layer from the carrier. Such embodiments are preferably implemented when the carrier is a flexible foil that can bend together with the incipient ITM during various stages of the manufacturing process, including formation of a looped form typical for ITMs, and also allowing the method to be implemented as a continuous production process where large laminated rolls (comprising the carrier, the incipient release layer and, optionally, one or more layers of the base) are made that are subsequently cut to desired lengths for making an actual specific ITM.

In some embodiments, the finishing manufacture includes forming at least one additional layer that constitutes a portion of the base. The above-described process is repeated a required number of times to yield the required number of layers for the ITM base, whether by securing a pre-formed sheet that constitutes a layer of the ITM or by forming a layer of a fluid curable material that, when cured, constitutes a layer of the ITM. Any suitable layer or layers are added and include a support layer (that typically includes fibers to provide stretch resistance) and a soft compliance layer.

In some embodiments, the finishing manufacture includes adding lateral projections to lateral edges of the incipient ITM. In some embodiments, such lateral projections allow a printing machine to accurately engage the ITM with no slippage.

In some embodiments, the finishing manufacture includes "post-curing", a process by which the almost-completed ITM is stored at elevated temperature to ensure that the various layers have cured sufficiently to ensure desired physical properties and/or sufficient interlayer adhesion.

In some embodiments, the method further comprises, subsequently to '3', packaging the ITM without separating the release layer from the carrier, so that the carrier serves as a protective layer for the ink-transfer surface during transport.

A person having ordinary skill in the art is familiar with such additional finishing steps and how such steps or similar ones can be carried out, so that further details are not necessary.

### Use of the ITM

In some embodiments, throughout the manufacturing process and until just before or after the ITM is mounted on an indirect printer, the release layer is not separated from the carrier, so that the carrier serves as a protective layer for the ink-transfer surface, for example, during storage, transport and installation.

Thus, according to an aspect of some embodiments of the disclosure herein, there is provided a method of mounting an intermediate transfer member (ITM) on an indirect printer, the method comprising:
providing an ITM prepared as described herein, while the release layer is still in contact with the carrier;
mounting the provided ITM on an indirect printer; and
subsequently to the mounting, separating the carrier from the release layer.

Thus, according to an aspect of some embodiments of the disclosure herein, there is also provided a method of mounting an intermediate transfer member (ITM) on an indirect printer, the method comprising:
providing an ITM prepared as described herein while the release layer is still in contact with the carrier;
separating the carrier from the release layer; and
mounting the provided ITM on, or into an indirect printer, said mounting being optionally performed within 1 hour from separating the carrier from the release layer.

### Intermediate Transfer Member (ITM)

According to an aspect of some embodiments of the disclosure herein, there is also provided an ITM manufactured as described herein.

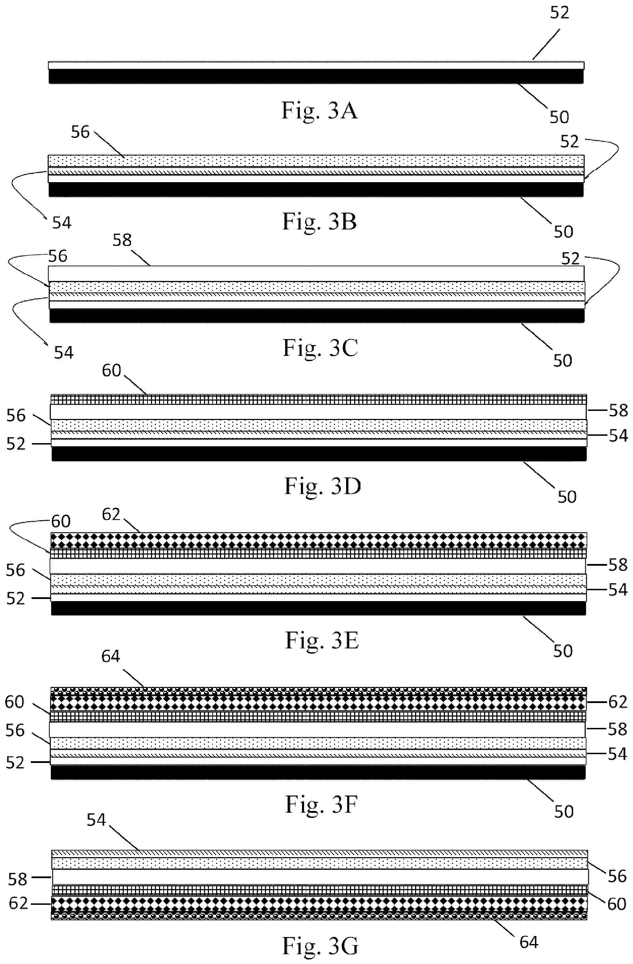

Production of an article in accordance with the invention commences with the provision of carrier designated **50** in **Figure 3A****.** In all the drawings, to distinguish it from the layers that form part of the finished article, the carrier **50** is shown as a solid black line.

Carrier **50** has an upper surface, constituting a carrier contact surface **52** of which the finish matches the desired finish of the surface coating of the finished article.

In some embodiments, for an ITM, carrier contact surface **52** may be a smooth or well-polished flat surface (*e*.*g*., having a roughness of Ra less than about 125 nm, for instance between 50 nm and 100 nm), that is typically defect-free within an area of at least 1,000 cm², at least 5,000 cm², or at least 20,000 cm². In some embodiments, it may be desirable for the articles to have a matt or even-patterned surface. Flexible foils are typically provided with information concerning their surface roughness, but, if needed, such data can be assessed by routine experimentation using standard measuring methods known to the skilled person, such as low energy electron diffraction, scanning tunneling microscopy (STM) and atomic force microscopy (AFM).

In some embodiments, the carrier contact surface may be flat not only in the micro scale, namely in terms of smoothness of the surface as herein-described, but also in the macro scale and broader sense of lack of waviness. Waviness, which can be expressed, for instance, in terms of waviness height, *e.g.,* by Wa & Wt,, and waviness spacing, Wsm, can be measured along any suitable waviness evaluation length adapted to the carrier surface being considered. Waviness can be measured according to standard procedures using a variety of instruments, such as a surface finish profilometer, which includes stylus-based contact instruments as well as optical and laser-based non-contact instruments. In some embodiments, the carrier contact surface has a waviness Wa of 100 µm or less, 50 µm or less, 10 µm or less, 1 µm or less, 0.8 µm or less, or 0.6 µm or less; and optionally more than 50 nm, more than 100 nm or more than 200 nm. In some such embodiments, this waviness profile is determined over an evaluation or sampling length of about 10 mm, of about 50 mm or of about 100 mm.

The method of the disclosure allows any desired surface finish to be achieved, as determined primarily by the carrier contact surface, regardless of the texture of the base on which the surface coating is supported in the finished article, such that many potential sources of defect (*e*.*g.*, bubbles, craters, fissures, surface discontinuities and other non-uniformities) are minimized or avoided.

It is to be noted that in the examples provided herein to illustrate the outstanding advantages of the inventive method, the smoothness of the cured surfaces was found to be highly similar (within ±10%) to the smoothness of the carrier contact surface. The exemplary layers of curable materials effectively replicated the surface texture and/or topography of the carrier upon which they were formed.

Additionally and alternatively, the finish of the carrier contact surface can be hydrophilic or hydrophobic. Typically, the carrier surface is hydrophilic, having a receding contact angle below 90°, below 80°, or below 70°, and more typically, below 60°, below 55°, or below 50°. However, even in embodiments wherein the carrier contact surface is hydrophobic, and the liquid first curable material has even a lower surface energy, wetting is achieved, as explained above. Moreover, in embodiments employing viscous fluid first curable material (the viscosity depressing beading of the fluid first curable material on the carrier contact surface as described above), the carrier contact surface may advantageously have low surface energy, thereby facilitating peeling of the release layer from the carrier.

In some embodiments, the carrier and/or its contact surface can be treated prior to the application of the first curable composition. Such treatment can be chemical (*e*.*g*., application of chemical agent) and/or physical *(e.g.,* corona treatment, plasma treatment, ozonation, *etc.).* Carrier **50** may be inflexible, being formed for example of a sheet of glass or metal but it is preferred for it to be formed of a flexible foil. In one embodiment, the foil is a sheet of aluminum-PET or PET having a thickness of between 0.05 mm and 1.00 mm so as to remain flexible but difficult to bend through a small radius, that is to say, it will not wrinkle.

The remaining steps described below apply to the manufacture of an ITM suitable for the Nanographic Printing™ technology of Landa Corporation, but it should be made clear that the invention can be used for ITM suitable for different printing technologies and for articles other than an ITM having a hydrophobic release coating that may be of moderate hydrophobicity or of moderate hydrophilicity.

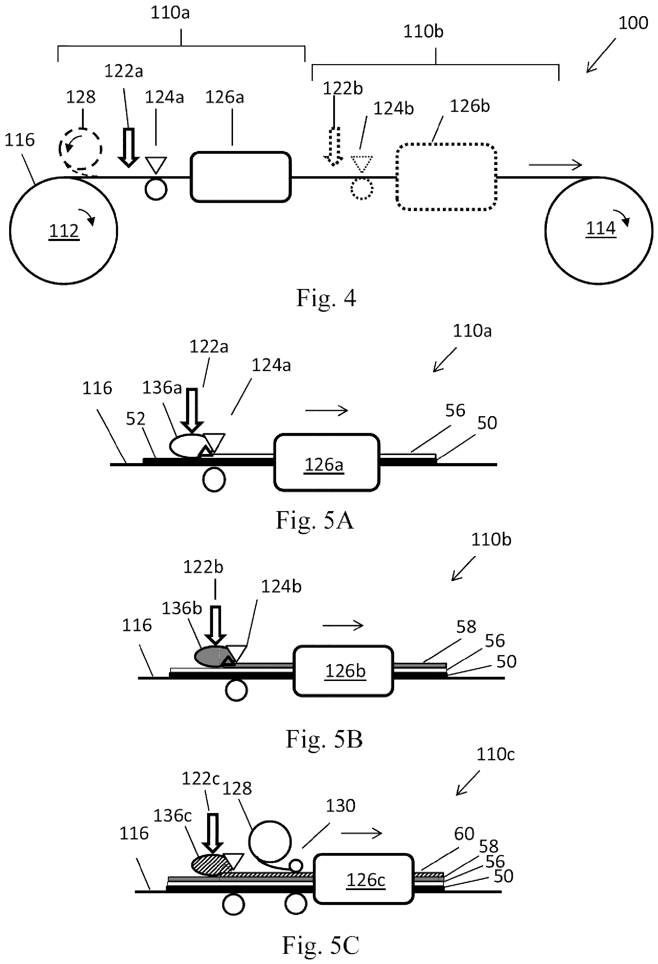

In a step, the results of which are shown in **Figure 3B****,** a fluid first curable composition (illustrated as **136a** in Figure 5A) is provided and a layer **56** is formed therefrom on carrier contact surface **52,** layer **56** constituting an incipient release layer having an outer ink-transfer surface **54.**

The fluid first curable composition of the release layer 56 may comprise an elastomer, typically made of a silicone polymer, for example, a polydimethylsiloxane, such as a vinyl-terminated polydimethylsiloxane.

In some embodiments, the fluid first curable material comprises a vinyl-functional silicone polymer, *e.g.,* a vinyl-silicone polymer including at least one lateral vinyl group in addition to the terminal vinyl groups, for example, a vinyl-functional polydimethyl siloxane.

In some exemplary embodiments, the fluid first curable material comprises a vinyl-terminated polydimethylsiloxane, a vinyl-functional polydimethylsiloxane including at least one lateral vinyl group on the polysiloxane chain in addition to the terminal vinyl groups, a crosslinker, and an addition-cure catalyst, and optionally further comprises a cure retardant.

An exemplary curable release layer formulation No.2 was prepared by thoroughly mixing the materials provided in Table 3 below.

**Table 3**

| **Ingredient** | **Supplier** | CAS **Number** | **Description** | | **Weight parts** |
|---|---|---|---|---|---|
| **DMS-V46** Resin | Gelest | 68951-99-5 | Vinyl terminated polydimethyl siloxane | | 100.0 |
| | | | Viscosity | 60,000 mPa.s | |
| | | | MW | ∼117,000 | |
| | | | Vinyl | ∼0.018-0.020 mmol/g | |
| **VQM-146** Resin | Gelest | 68584-83-8 | 20-25% Vinyl resin in DMS V46 | | 40.0 |
| | | | Viscosity | 50,000-60,000 mPa.s | |
| | | | Vinyl | ∼0.18-0.23 mmol/g | |
| **Inhibitor 600** | Evonik | 204-070-5 Mix of divinylpolydimethylsiloxane and 2-methylbut-3 -yn-2-ol | | | 5.0 |
| Cure | | Viscosity | 900 mPa.s | | |
| Retardant | | Vinyl | 0.11 mmol/g | | |
| **SIP6831.2** Catalyst | Gelest | 68478-92-2 | Platinum divinyltetramethyldisiloxane | | 0.1 |
| | | | Platinum | 2.1-2.4% | |
| **HMS-301** Cross-Linker | Gelest | 68037-59-2 | Poly(dimethylsiloxane-co-methyl-hydrosiloxane), trimethylsilyl terminated | | 4.0 |
| | | | Hydride | 4.2 mmol/g | |

The layer **56** of fluid first curable composition is applied to carrier contact surface **52,** and is subsequently cured. Layer **56** may be spread to the desired thickness using, for example, a doctor blade (knife on a roll), without allowing the doctor blade to contact the surface that will ultimately act as the ink-transfer surface **54** of the ITM and imperfections in the doctor blade will not affect the quality of the finished product. Generally, layer **56** may have a thickness of between about 2 micrometers and about 200 micrometers. An apparatus in which such step and method can be implemented is schematically illustrated in Figures 4 and 5A.

For example, the above-detailed release layer formulation may be uniformly applied upon an aluminum-PET or a PET carrier, leveled to a thickness of about 50 micrometers and cured for approximately 10 minutes at 120-130°C.

In another step, the results of which are shown in **Figure 3C****,** an additional layer **58,** referred to as a compliance layer, is applied to layer **56,** on the side opposite to ink-transfer surface **54.** Compliance layer **58** is an elastomeric layer which allows layer **56** and its outermost surface **54** to follow closely the surface contour of a substrate onto which an ink image is impressed. The attachment of compliance layer **58** to the side opposite to ink-transfer surface **54** may involve the application of an adhesive or bonding composition in addition to the material of compliance layer **58.** Generally, compliance layer **58** may typically have a thickness of between about 100 micrometers and about 300 micrometers or more. Adhesive layers, if present, are typically no more than 100 micrometers thick, and more typically no more than 20 micrometers thick.

Compliance layer **58** may have the same composition as that of release layer **56,** but typically is selected to have different mechanical properties (*e*.*g*., greater resistance to tension). Such desired differences in properties may be achieved by varying the proportions between the ingredients used to prepare the formulation of release layer **56** and/or by the addition of further ingredients to such formulation and/or by the selection of different curing conditions and such modifications. For instance the addition of filler particles may favorably increase the mechanical strength of compliance layer **58** relative to release layer **56.** Alternatively, compliance layer **58** may have a different composition to that of release layer **56.** For instance, the compliance layer **58** can be made of alkyl acrylate copolymer rubbers (ACM), methyl vinyl silicone rubber (VMQ), ethylene propylene diene monomer rubber (EPDM), fluoroelastomer polymers, nitrile butadiene rubber (NBR), ethylene acrylic elastomer (EAM), and hydrogenated nitrile butadiene rubber (HNBR).

As a non-limiting example, Silopren® LSR 2530 (Momentive Performance Materials Inc.), a two-component liquid silicone rubber, in which the two components are mixed at a 1:1 ratio, was applied to the cured release layer **56** previously described. The silicone rubber mixture was metered / leveled with a knife blade to obtain an incipient compliance layer **58** having a thickness of about 250 micrometers, which was then cured for approximately 5 minutes at 150-160°C.

In another step, the results of which are shown in **Figure 3D****,** a support layer **60** is constructed on the compliance layer **58** on which a fiber reinforcement, in the form of a web or a fabric, is disposed, to provide the support layer **60** with sufficient structural integrity to withstand stretching when the ITM is held in tension in a printing system. The support layer **60** is formed by coating the fiber reinforcement with a resin that is subsequently cured and remains flexible after curing.

Alternatively, support layer **60** may be separately formed as a reinforcement layer, comprising such fibers embedded and/or impregnated within the independently cured resin. In such case, support layer **60** may be attached to compliance layer **58** via an adhesive layer, optionally eliminating the need to cure the support layer **60** *in situ.* Generally, support layer **60,** whether formed *in situ* on compliance layer **58** or separately, may have a thickness of between about 100 micrometers and about 500 micrometers, part of which is attributed to the thickness of the fibers or the fabric which generally varies between about 50 micrometers and about 200 micrometers. However, for heavy-duty applications or for other types of multi-layered articles the support layer can have a thickness of more than 200 micrometers, more than 500 micrometers, or 1 mm or more.

For example, to the multi-layered structure described herein, comprising a vinyl-functionalized release layer **56** and a two-components silicone rubber compliance layer **58,** was applied a support layer **60** comprising woven fabric of glass fibers. The glass fiber fabric, having a thickness of about 100 micrometers, was a plain weave fabric having 16 yarns/cm in both perpendicular directions. It was embedded into a curable fluid comprising a liquid silicone rubber Silopren® LSR 2530 corresponding to the compliance layer. Overall, the resulting support layer **60** had a thickness of about 200 micrometers and was cured at 150°C for approximately 2-5 minutes.

Following the *in situ* formation or attachment of the support layer **60,** additional layers can be built up on the reverse side of the support layer **60** as required. In **Figure 3E****,** a thick felt blanket **62** is secured by a cured adhesive or resin to the reverse side of the support layer **60,** and in **Figure 3F****,** a high friction material **64** is coated onto the reverse side of the felt blanket **62.** As will be appreciated by persons skilled in the art, various relatively soft rubbers may serve for the preparation of a layer having high friction properties, silicone elastomers being but an example of such rubbers.

As mentioned, all layers *(e.g.,* **58, 60, 62, 64,** or any intervening adhesive or priming layer and the like) added to the release layer of the ITM are said to jointly form the base of the structure, as illustrated by base **32** in Figure 2.

Though not shown in the drawings, one may attach to the support layer **60** along its two edges two fabric strips, each resembling one half of a zip fastener. The teeth or formations on these strips are intended to be gripped in channels as the ITM passes through certain positionally critical regions of the printing system to maintain the ITM under lateral tension. Similarly one may attach to the ends of the multi-layered strip means enabling the two ends to be joined to form a continuous looped belt.

Before the ITM is used, it is necessary to remove carrier **50** (including its contact surface **52**), to expose ink-transfer surface **54** of release layer **56,** as illustrated in **Figure 3G****.** The finished product can simply be peeled away from carrier **50** and in the case of an ITM, the fact that release layer **56** may be somewhat hydrophobic will enable the ITM to separate easily from carrier **50** without damage to ink-transfer surface **54.** For example, a 100 µm thick siloxane layer may be peeled off a PET foil using a force smaller 50 gr/cm, in some embodiments smaller than 20 gr/cm, smaller than 10 gr/cm, smaller than 5 gr/cm, smaller than 3 gr/cm, or even smaller than 2 gr/cm. It should be readily appreciated by the person skilled in the art that such a low force is much lower than the tear strength of a PET foil, even at a thickness as low as 12µm. Likewise, such a low force as may be required for peeling is much lower than the tear strength of a sufficiently cured siloxane layer, even at a release layer thickness as low as 100 µm and even without any further enforcement of a base layer. Thus, when an ITM, including a release layer and a base layer is manufactured, supported on a polymer carrier such as PET or polyimide foil according to the teachings herein, peeling the ITM off the carrier (or *vice versa*) may readily be done without damaging the release layer and preferably without damaging the carrier.

If the carrier **50** is a flexible foil, it may be preferred to leave it in place on the ITM until such time as the ITM is to be installed into a printing system. The foil will act to protect the ink-transfer layer **54** of the ITM during storage, transportation and installation. Additionally, carrier **50** can be replaced, following completion of the manufacturing process, by an alternative foil able to serve as a protective film.

It is furthermore possible to use the carrier **50** to help in the installation of the ITM in the printing system by providing on it attachment points to assist in pulling the ITM around its desired path in the printing system.

Figure 4 and Figures 5A to 5C schematically illustrate an apparatus **100** in which the present method for manufacturing a self-supporting strip can be implemented, according to some embodiments. **Figure 4** provides a schematic overview of such an apparatus **100** with one or more casting stations **110,** such as layer casting stations **110a** and **110b.** Casting station **110** is configured for forming a layer of a curable fluid composition on a carrier, and then curing the layer. Forming the layer may be done for example by dispensing the fluid composition on the carrier and possibly levelling the layer prior to curing.

Apparatus **100** further comprises an unwinding roller **112** and a winding roller **114** moving a flexible conveyer **116** through layer casting stations **110a** and **110b.** According to some embodiments flexible conveyer **116** may serve to support and drive carrier **50** as schematically illustrated in **Figures 5A** - **5C****.** In some such applications the conveyer is a looped conveyer, having a section (not depicted here) returning from winding roller **114** towards unwinding roller **112.** In some embodiments, carrier **50** is directly tensioned between rollers **112** and **114** as is schematically illustrated in Figure 4. Unprocessed carrier **50** is unwound from unwinding roller **112,** and after passing through stations **110a** and **110b,** is rewound onto winding roller **114.**

Layer casting station **110a** comprises a dispensing station **122a,** able to dispense curable fluid compositions suitable for the desired multi-layered articles, a leveling station **124a,** able to control the thickness of the curable layer as it moves downstream of the station, and a curing station **126a,** able to at least partially cure the layer enabling it to serve as incipient layer for a subsequent step, if any. The dispensing station **122a,** the leveling station **124a** and the curing station **126a** can be suitably positioned along the path followed by carrier **50** (or conveyer **116).** Likewise, layer casting station **110b of** apparatus **100** may optionally include dispensing station **122b,** leveling station **124b** and curing station **126b.** Furthermore, layer casting station **110** may include additional sub-stations, illustrated by a dispensing roller **128** in station **110a.**

It is noted that according to some embodiments, the configuration depicted in **Figure 4** wherein unprocessed carrier **50** is unwound from unwinding roller **112,** and then the processed carrier **50** is rewound onto winding roller **114,** is advantageous, for potentially providing carrier **50** with a clean, substantially contaminants-free carrier contact surface **52.** A suitable carrier, such as *e.g.,* a commercially available PET sheet, may be provided having been rolled on unwinding roll **112** during manufacturing, in a substantially clean environment. Hence carrier contact surface **52** may be exposed to the ambient in apparatus **100** as unwinding roll **112** unwinds, substantially immediately prior to the dispensing of the curable fluid compositions in dispensing station **122a.** Consequently, the incipient release layer, formed on the surface of the curable fluid composition layer facing the carrier after curing, may be substantially free of defects (such that are caused by air-carried contaminants).

Additionally or alternatively, apparatus **100,** or parts thereof where such concern may exist, can be operated in a clean environment to further reduce the possible exposure of the carrier contact surface to contaminants and/or the development of defects on the surface coating. Additionally or alternatively, a cleaning station (not depicted here) may also be employed upstream of the dispensing station for cleaning the carrier contact surface **52** just prior to dispensing, to ensure or to maintain a contaminants-free carrier contact surface **52** and hence a substantially defect-free release layer.

Though not illustrated in the figure, the apparatus may further include upstream of the dispensing station a "surface treatment" station facilitating the subsequent application of a curable composition, or its attachment to the carrier contact surface or incipient layer as the case may be. As mentioned in relation with the carrier, the optional surface treatment station (not shown) can be suitable for physical treatment (*e*.*g*., corona treatment, plasma treatment, ozonation, *etc.).*

**Figure 5A** schematically illustrates how in a casting station **110a** of apparatus **100,** a carrier **50** placed on conveyor **116** can be coated. At dispensing station **122a,** the curable composition **136a** of release layer **56** is applied to carrier contact surface **52.** As carrier **50** is driven in the direction of the arrow, the curable composition **136a** is leveled to a desired thickness at leveling station **124a,** for instance, by using a doctor blade. As the leveled layer proceeds downstream, it enters curing station **126a,** configured so as to at least partially cure curable composition **136a,** enabling the formation of incipient layer **56** at the exit side of the curing station. Such exemplary steps have been described in connection with **Figures 3A** and 3B.

**Figures 5B** and **5C** schematically illustrate how additional layers (forming the base) can be applied. In **Figure 5B****,** a curable composition **136b** is dispensed upon release layer 56 at dispensing station **122b** (the release layer **56** having been at least partially cured as explained above). Curable composition **136b** is leveled to a desired thickness at leveling station **124b,** then enters curing station **126b,** and exits curing station **126b** sufficiently cured to serve as incipient layer **58** for a subsequent step, and so on. Such an exemplary step has been described in connection with **Figure 3C****.**

**Figure 5C** schematically depicts a curable composition **136c** being applied to layer **58** at dispensing station **122c.** A backbone of a support layer *(e.g.,* a fabric) can be delivered by dispensing roller **128.** The exemplary fabric can be submerged into the curable composition **136c** at a station **130** prior to their entry into curing station **126c.** In such a manner, a support layer **60** can be formed at the exit side of the curing station **126c.**

It is noted that, according to some embodiments, a single layer-casting station **110** may be employed to sequentially form the layers of the self-supported strip as described above. For example, apparatus **100** of Figure 4 may be employed with only one layer-casting station **110a,** whereas the processed strip is passed sequentially, time after time, through the casting station to build-up the strip one layer at a time. First, an unprocessed carrier roll may be loaded to the unwinding roller **112** of the apparatus and tensioned between unwinding roller **112** and winding roller **114.** Then the release layer may be formed on the carrier as described above in **Figure 5A****.** When the processed carrier has been coated with the release layer **56** to the entire length of the carrier sheet, and the processed carrier has been accordingly wound on winding roller **114,** the roll of processed carrier may be taken off winding roller **114** and may be loaded again onto unwinding roller **112.** Then the processed carrier may be tensioned between unwinding roller **112** and winding roller **114** as described above, and a next layer **58** may be applied thereon, as illustrated in **Figure 5B****.** By sequentially repeating the steps of loading a processed carrier on unwinding roller **112** and then casting a new layer thereupon, a strip as described above, including the said release layer, and any layer of the base and possibly yet additional layers, may be constructed. This method can be viewed as a cyclic roll-to-roll manufacturing method, the number of cycles depending on the number of layers to be formed for the self-supported strip.

The finished article comprises the carrier and, disposed thereon, the self-supported strip, generally comprising several layers, at least the surface coating or release layer of the said first curable material and the base layer. According to some embodiments, the finished strip (that is the self-supported strip attached to the carrier) may be further processed following the layer manufacturing described above. For example, an elongated strip of the finished article may be looped so as to connect the two opposing ends of the strip to one another thereby producing a looped belt (or a looped ITM for a printing machine).

## Claims

1. A method of manufacturing a self-supported strip having an at least partially cured surface coating, which method comprises:
a. providing a fluid first curable material (54) configured to be at least partially cured by a curing process;
b. providing a carrier (50) having a carrier contact surface (52), said carrier contact surface being wettable by said fluid first curable material, said carrier (50) being configured to maintain structural integrity when subject to said curing process;
c. applying said fluid first curable material onto said carrier (50), said fluid first curable material wetting said carrier contact surface to form a layer (54) of said fluid first curable material on said carrier contact surface (52);
d. at least partially curing said fluid first curable material to form said at least partially cured surface coating of the self-supported strip; and
e. securing a flexible base (56,58,60,62,64) to, or forming a flexible base on, a surface of the at least partially cured surface coating opposite said carrier;
wherein said at least partially cured surface coating (54) together with said flexible base (58,60,62,64) are peelable from said carrier (50), to produce said self-supported strip.

2. The method of claim 1, wherein the carrier contact surface is smooth, having an average roughness (Ra) of at most 250 nm.

3. The method of any one of claim 1 or claim 2, wherein said carrier (50) is a flexible foil.

4. The method of any one of claim 1 to claim 3, wherein said carrier contact surface (52) is hydrophobic.

5. The method of any one of claim 1 to claim 4, wherein said at least partially cured surface coating (54) of the self-supported strip is hydrophobic.

6. The method of any one of claim 1 to claim 5, wherein said carrier contact surface (52) comprises a surface selected from the group consisting of a metal surface and a metal oxide surface.

7. The method of any one of claim 1 to claim 6, wherein said carrier contact surface (52) includes a polymeric surface, comprising, or consisting essentially of, a polymer selected from the group consisting of polyesters, poly-fluorocarbons and polyimides.

8. The method of any one of claim 1 to claim 7, further comprising applying at least one of heat and radiation to said layer of said fluid first curable material, to accelerate curing thereof.

9. The method of any one of claim 1 to claim 8, wherein said fluid first curable material comprises at least one polymer selected from the group comprising polyurethane polymers and silicone polymers.

10. The method of any one of claim 1 to claim 9, wherein said step of forming said flexible base on the surface of the at least partially cured surface coating (54) opposite said carrier (50) comprises forming a layer (56) of a fluid second curable material on the latter surface, said layer of said fluid second curable material constituting at least part of the incipient base of the self-supported strip.

11. The method of claim 10, wherein said forming said layer (56) of said fluid second curable material comprises:
after said layer of said first curable material cures to an extent so as to be no longer fluid;
applying a primer layer to said layer of said first curable material; and
depositing said fluid second curable material on said primer layer, thereby forming said layer of said fluid second curable material.

12. The method of any one of claim 1 to claim 11, wherein said securing a flexible base to a surface of the at least partially cured surface coating opposite said carrier further comprises:
providing a sheet constituting an incipient layer forming at least part of said base of said self-supported strip, and
contacting said sheet to said surface of the at least partially cured surface coating,
thereby securing said flexible base to said surface of the at least partially cured surface coating.

13. The method of any one of claim 1 to claim 12, wherein said step of securing said flexible base on a surface of the at least partially cured surface coating opposite said carrier comprises applying a fabric or fiber reinforcement layer (60) to overlie the surface of the at least partially cured surface coating.

14. The method of any one of claim 1 to claim 13, further including forming at least one additional layer (62,64) that constitutes a portion of said base.

15. The method of any one of claim 1 to claim 14, which further includes adding lateral projections to lateral edges of said self-supported strip.

16. The method of any one of claim 1 to claim 15, wherein the self-supported strip is an intermediate transfer member (ITM) for use in an indirect printing system; and wherein said layer of said fluid first curable material constitutes an at least partially cured release layer, said at least partially cured release layer, once fully cured, defining an outer ink-transfer surface of the ITM.

## Patentansprüche

1. Verfahren zur Herstellung eines selbsttragenden Streifens mit einer mindestens teilweise gehärteten Beschichtung, wobei das Verfahren folgendes umfasst:
a. Bereitstellen eines fluiden ersten härtbaren Materials (54), das für eine mindestens teilweise Härtung durch einen Härtungsprozess gestaltet ist;
b. Bereitstellen eines Trägers (50) mit einer Trägerkontaktoberfläche (52), wobei die Trägerkontaktoberfläche durch das fluide erste härtbare Material benetzt werden kann, wobei der Träger (50) so gestaltet ist, dass er die strukturelle Integrität beibehält, wenn er dem Härtungsprozess ausgesetzt wird;
c. Auftragen des fluiden ersten härtbaren Materials auf den Träger (50), wobei das fluide erste härtbare Material die Trägerkontaktoberfläche benetzt, um eine Schicht (54) des fluiden ersten härtbaren Materials auf der Trägerkontaktoberfläche (52) zu bilden;
d. mindestens teilweises Härten des fluiden ersten härtbaren Materials, um die mindestens eine teilweise gehärtete Beschichtung des selbsttragenden Streifens zu bilden; und
e. Sichern einer flexiblen Basis (56, 58, 60, 62, 64) oder Ausbilden einer flexiblen Basis an einer Oberfläche der mindestens teilweise gehärteten Beschichtung gegenüber dem Träger;
wobei die mindestens teilweise gehärtete Beschichtung (54) gemeinsam mit der flexiblen Basis (58, 60, 62, 64) von dem Träger (50) abgezogen werden kann, um den selbsttragenden Streifen zu erzeugen.

2. Verfahren nach Anspruch 1, wobei die Trägerkontaktoberfläche glatt ist, mit einer gemittelten Rautiefe (Ra) von höchstens 250 nm.

3. Verfahren nach Anspruch 1 oder Anspruch 2, wobei der Träger (50) eine flexible Folie ist.

4. Verfahren nach einem der Ansprüche 1 bis 3, wobei die Trägerkontaktoberfläche (52) hydrophob ist.

5. Verfahren nach einem der Ansprüche 1 bis 4, wobei die mindestens teilweise gehärtete Beschichtung (54) des selbsttragenden Streifens hydrophob ist.

6. Verfahren nach einem der Ansprüche 1 bis 5, wobei die Trägerkontaktoberfläche (52) eine Oberfläche umfasst, die ausgewählt ist aus der Gruppe bestehend aus einer Metalloberfläche und einer Metalloxidoberfläche.

7. Verfahren nach einem der Ansprüche 1 bis 6, wobei die Trägerkontaktoberfläche (52) eine polymere Oberfläche umfasst, die ein Polymer umfasst oder im Wesentlichen aus diesem besteht, das ausgewählt ist aus der Gruppe bestehend aus Polyestern, Polyfluorkohlenwasserstoffen und Polyimiden.

8. Verfahren nach einem der Ansprüche 1 bis 7, ferner umfassend das Anwenden mindestens von Hitze und/oder Strahlung auf die Schicht aus dem fluiden ersten härtbaren Material, um dessen Härtung zu beschleunigen.

9. Verfahren nach einem der Ansprüche 1 bis 8, wobei das fluide erste härtbare Material mindestens ein Polymer umfasst, das ausgewählt ist aus der Gruppe, die Polyurethanpolymere und Silikonpolymere umfasst.

10. Verfahren nach einem der Ansprüche 1 bis 9, wobei der Schritt des Ausbildens der flexiblen Basis auf der Oberfläche der mindestens teilweise gehärteten Beschichtung (54) gegenüber dem Träger (50) das Ausbilden einer Schicht (56) aus einem fluiden zweiten härtbaren Material auf der letztgenannten Oberfläche umfasst, wobei die Schicht aus dem fluiden zweiten härtbaren Material mindestens einen Teil der einsetzenden Basis des selbsttragenden Streifens bildet.

11. Verfahren nach Anspruch 10, wobei das Ausbilden der Schicht (56) aus dem fluiden zweiten härtbaren Material folgendes umfasst:
Auftragen einer Primerschicht auf die Schicht aus dem ersten härtbaren Material; und
Abscheiden des fluiden zweiten härtbaren Materials auf die Primerschicht, wodurch die Schicht aus dem fluiden zweiten härtbaren Material gebildet wird.

12. Verfahren nach einem der Ansprüche 1 bis 11, wobei das Sichern der flexiblen Basis an einer Oberfläche der mindestens teilweise gehärteten Beschichtung gegenüber dem Träger ferner folgendes umfasst:
Bereitstellen einer Bahn die eine einsetzende Schicht darstellt, die mindestens einen Teil der der Basis des selbstragenden Streifens bildet; und
Inkontaktbringen der Bahn mit der Oberfläche der mindestens teilweise gehärteten Beschichtung,
wodurch die flexible Basis an der Oberfläche der mindestens teilweise gehärteten Beschichtung gesichert wird.

13. Verfahren nach einem der Ansprüche 1 bis 12, wobei der Schritt des Sicherns der flexiblen Basis an einer Oberfläche der mindestens teilweise gehärteten Beschichtung gegenüber dem Träger das Auftragen einer Gewebe- oder Faserverstärkungsschicht (60) umfasst, so dass diese über der Oberfläche der mindestens teilweise gehärteten Beschichtung liegt.

14. Verfahren nach einem der Ansprüche 1 bis 13, ferner umfassend das Ausbilden mindestens einer zusätzlichen Schicht (62, 64), die einen Teil der Basis bildet.

15. Verfahren nach einem der Ansprüche 1 bis 14, das ferner das Hinzufügen lateraler Vorsprünge zu lateralen Kanten des selbsttragenden Streifens umfasst.

16. Verfahren nach einem der Ansprüche 1 bis 15, wobei der selbsttragende Streifen ein intermediäres Übertragungselement (ITM) zur Verwendung in einem indirekten Drucksystem ist; und wobei die Schicht aus dem fluiden ersten härtbaren Material eine mindestens teilweise gehärtete Abziehschicht bildet, wobei die mindestens teilweise gehärtete Abziehschicht, sobald sie vollständig gehärtet ist, eine äußere Tintenübertragungsoberfläche des ITM definiert.

## Revendications

1. Procédé de fabrication d'une bande autoportante ayant un revêtement de surface au moins partiellement durci, lequel procédé comprend les étapes consistant à :
a. fournir un premier matériau durcissable fluide (54) conçu pour être au moins partiellement durci par un processus de durcissement ;
b. fournir un support (50) ayant une surface de contact de support (52), ladite surface de contact de support étant mouillable par ledit premier matériau durcissable fluide, ledit support (50) étant conçu pour maintenir l'intégrité structurelle lorsqu'il est soumis audit processus de durcissement ;
c. appliquer ledit premier matériau durcissable fluide sur ledit support (50), ledit premier matériau durcissable fluide mouillant ladite surface de contact de support pour former une couche (54) dudit premier matériau durcissable fluide sur ladite surface de contact de support (52) ;
d. durcir au moins partiellement ledit premier matériau durcissable fluide pour former ledit revêtement de surface au moins partiellement durci de la bande autoportante ; et
e. fixer une base flexible (56, 58, 60, 62, 64) à, ou former une base flexible sur, une surface du revêtement de surface au moins partiellement durci à l'opposé dudit support ;
ledit revêtement de surface au moins partiellement durci (54) ainsi que ladite base flexible (58, 60, 62, 64) étant pelables dudit support (50), pour produire ladite bande autoportante.

2. Procédé selon la revendication 1, la surface de contact de support étant lisse, ayant une rugosité moyenne (Ra) d'au plus 250 nm.

3. Procédé selon l'une quelconque des revendications 1 ou 2, ledit support (50) étant une feuille flexible.

4. Procédé selon l'une quelconque des revendications 1 à 3, ladite surface de contact de support (52) étant hydrophobe.

5. Procédé selon l'une quelconque des revendications 1 à 4, ledit revêtement de surface au moins partiellement durci (54) de la bande autoportante étant hydrophobe.

6. Procédé selon l'une quelconque des revendications 1 à 5, ladite surface de contact de support (52) comprenant une surface choisie dans le groupe constitué par une surface métallique et une surface d'oxyde métallique.

7. Procédé selon l'une quelconque des revendications 1 à 6, ladite surface de contact de support (52) comprenant une surface polymère, comprenant, ou consistant essentiellement en un polymère choisi dans le groupe constitué par les polyesters, les poly-fluorocarbures et les polyimides.

8. Procédé selon l'une quelconque des revendications 1 à 7, comprenant en outre l'étape consistant à appliquer de la chaleur et/ou du rayonnement à ladite couche dudit premier matériau durcissable fluide, pour accélérer son durcissement.

9. Procédé selon l'une quelconque des revendications 1 à 8, ledit premier matériau durcissable fluide comprenant au moins un polymère choisi dans le groupe comprenant les polymères de polyuréthane et les polymères de silicone.

10. Procédé selon l'une quelconque des revendications 1 à 9, ladite étape de formation de ladite base flexible sur la surface du revêtement de surface au moins partiellement durci (54) opposé audit support (50) comprenant l'étape consistant à former une couche (56) d'un second matériau durcissable fluide sur cette dernière surface, ladite couche dudit second matériau durcissable fluide constituant au moins une partie de la base initiale de la bande autoportante.

11. Procédé selon la revendication 10, ladite formation de ladite couche (56) dudit second matériau durcissable fluide comprenant les étapes consistant à :
après que ladite couche dudit premier matériau durcissable a durci au point de ne plus être fluide ;
appliquer une couche primaire sur ladite couche dudit premier matériau durcissable ; et
déposer ledit second matériau durcissable fluide sur ladite couche primaire, formant ainsi ladite couche dudit second matériau durcissable fluide.

12. Procédé selon l'une quelconque des revendications 1 à 11, ladite fixation d'une base flexible à une surface du revêtement de surface au moins partiellement durci opposé audit support comprenant en outre les étapes consistant à :
fournir une feuille constituant une couche initiale formant au moins une partie de ladite base de ladite bande autoportante, et
mettre en contact ladite feuille avec ladite surface du revêtement de surface au moins partiellement durci,
fixer ainsi fixer ladite base flexible à ladite surface du revêtement de surface au moins partiellement durci.

13. Procédé selon l'une quelconque des revendications 1 à 12, ladite étape de fixation de ladite base flexible sur une surface du revêtement de surface au moins partiellement durci opposée audit support comprenant l'étape consistant à appliquer une couche de renforcement en tissu ou en fibres (60) pour recouvrir la surface du revêtement de surface au moins partiellement durci.

14. Procédé selon l'une quelconque des revendications 1 à 13, comprenant en outre l'étape consistant à former au moins une couche supplémentaire (62, 64) qui constitue une partie de ladite base.

15. Procédé selon l'une quelconque des revendications 1 à 14, qui comprend en outre l'étape consistant à ajouter des saillies latérales aux bords latéraux de ladite bande autoportante.

16. Procédé selon l'une quelconque des revendications 1 à 15, la bande autoportée étant un élément de transfert intermédiaire (ITM) destiné à être utilisé dans un système d'impression indirecte ; et ladite couche dudit premier matériau durcissable fluide constituant une couche de séparation au moins partiellement durcie, ladite couche de séparation au moins partiellement durcie, une fois complètement durcie, définissant une surface de transfert d'encre extérieure de l'ITM.
